(19) **Europäisches Patentamt**
**European Patent Office**
**Office européen des brevets**

(11) **EP 3 511 758 A1**

(12) **EUROPEAN PATENT APPLICATION**
published in accordance with Art. 153(4) EPC

(43) Date of publication:
**17.07.2019 Bulletin 2019/29**

(51) Int Cl.:
*G02B 27/01* *(2006.01)*    *G06F 3/01* *(2006.01)*

(21) Application number: **16916563.6**

(86) International application number:
**PCT/CN2016/100072**

(22) Date of filing: **26.09.2016**

(87) International publication number:
**WO 2018/053824 (29.03.2018 Gazette 2018/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **SZ DJI Technology Co., Ltd.**
**Shenzhen, Guangdong 518057 (CN)**

(72) Inventors:
• **WU, Yifan**
  **Shenzhen**
  **Guangdong 518057 (CN)**
• **LIU, Huaiyu**
  **Guangdong 518057 (CN)**
• **WU, Jun**
  **Guangdong 518057 (CN)**
• **GONG, Ming**
  **Guangdong 518057 (CN)**
• **GAO, Xiufeng**
  **Guangdong 518057 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **UNMANNED AERIAL VEHICLE CONTROL METHOD, HEAD-MOUNTED DISPLAY GLASSES, AND SYSTEM**

(57)    The present disclosure provides a method for controlling an unmanned aerial vehicle (UAV), head-mounted display glasses, and a system. The method comprises: displaying a movable mark (10); acquiring input information; and moving, according to the input information, the movable mark (10) to control the UAV. In some embodiments of the present disclosure, the input information is acquired through the head-mounted display glasses (50), and the head-mounted display glasses (50) may be configured to control a cursor (11) to move on a screen (52) according to a user's posture information. Alternatively, the head-mounted display glasses (50) may be configured to control the cursor (11) to move on the screen according to direction information for moving the cursor (11) input by the user through an input device. After the cursor (11) moves to a target point on the screen (52), the target point is selected according to selection instruction input by the user and the UAV is controlled to enter a corresponding flight mode or control mode as so as realize a method of controlling the UAV, such as pointing flight, smart follow, camera focus, or the like.

FIG. 1

```
┌──────────────────────────────────┐
│   Display a movable mark         │ ──── S101
└──────────────────────────────────┘
                 │
                 ▼
┌──────────────────────────────────┐
│   Acquire input information of    │ ──── S102
│   a user                          │
└──────────────────────────────────┘
                 │
                 ▼
┌──────────────────────────────────┐
│   Move, according to the input    │ ──── S103
│   information, the movable mark    │
│   to control the UAV              │
└──────────────────────────────────┘
```

FIG. 1A

FIG. 1B

**Description**

## TECHNICAL FIELD

The present disclosure relates to the Unmanned Aerial Vehicle (UAV) field and, more particularly, to a UAV control method, head-mounted display glasses, and a system.

## BACKGROUND

In the conventional technologies, a control device, such as a mobile phone, a remote control with a touch screen, virtual reality (VR) glasses, or the like, can be used to control a UAV. For example, an application for controlling UAVs is installed on a mobile phone, and a user can operate the application by touching the phone screen to control UAVs. In addition, a user may also control UAVs by touching the screen of a remote control.

However, VR glasses lack a touch screen, resulting in impossibility of using the manner of the touch screen to control UAVs, such as pointing flight mode, smart follow mode, camera focus mode, etc.

## SUMMARY

The present disclosure provides an unmanned aerial vehicle (UAV) control method, head-mounted display glasses, and a system, for achieving motion control of a UAV.

One aspect of the present disclosure provides a method for controlling an unmanned aerial vehicle (UAV), comprising: displaying a movable mark; acquiring input information; and moving, according to the input information, the movable mark to control the UAV.

Another aspect of the present disclosure provides head-mounted display glasses for controlling an unmanned aerial vehicle (UAV), comprising: at least one processor and a screen, wherein: the screen is configured to display a movable mark; and the at least one processor is configured to acquire input information, and move, according to the input information, the movable mark to control the UAV.

Still another aspect of the present disclosure provides an unmanned aerial vehicle (UAV) control system, comprising: a UAV and head-mounted display glasses, wherein the head-mounted display glasses are configured to control the UAV.

According to the method for controlling an UAV, the head-mounted display glasses, and the system provided by the present disclosure, input information is obtained through the head-mounted display glasses. The input information may be posture information of a user or may be direction information input by the user through an input device for moving a cursor. That is, the head-mounted display glasses may be configured to control the cursor to move on the screen according to the user posture information or according to the direction information for moving the cursor input by the user through the input device. After the cursor moves to a target point on the screen, the target point is selected according to the selection instruction input by the user, and the UAV is controlled to enter a corresponding flight mode or control mode, so as to realize a control manner of the UAV, such as a pointing flight mode, a smart follow mode, a camera focus mode, or the like.

## BRIEF DESCRIPTION OF THE DRAWINGS

To more clearly describe the technical solutions in the present invention or in the existing technologies, drawings accompanying the description of the embodiments or the existing technologies are briefly described below. Apparently, the drawings described below only show some embodiments of the disclosure. For those skilled in the art, other drawings may be obtained based on these drawings without creative efforts.

FIG. 1 is a schematic flow chart of a method for controlling an unmanned aerial vehicle (UAV) according to one embodiment of the present disclosure;

FIG. 1A is a schematic diagram of a "pointing flight" control interface according to an embodiment of the present disclosure;

FIG. 1B is a schematic diagram of a "smart follow" control interface according to one embodiment of the present disclosure;

FIG. 2 is a schematic flow chart of a method for controlling a UAV according to another embodiment of the present disclosure;

FIG. 2A is a top view of a user's head and VR glasses according to another embodiment of the present disclosure;

FIG. 2B is a schematic diagram showing a cursor moving to the left on the screen according to another embodiment of the present disclosure;

FIG. 2C is another top view of the user's head and the VR glasses according to another embodiment of the present disclosure;

FIG. 2D is a schematic diagram showing the cursor moving to the right on the screen according to another embodiment of the present disclosure;

FIG. 2E is a side view of the user's head and the VR glasses according to another embodiment of the present disclosure;

FIG. 2F is a schematic diagram showing the cursor moving downward on the screen according to another embodiment of the present disclosure;

FIG. 2G is another view side of the user's head and the VR glasses according to another embodiment of the present disclosure;

FIG. 2H is a schematic diagram showing the cursor moving upward on the screen according to another embodiment of the present disclosure;

FIG. 2I is a schematic diagram showing coordinates of the cursor on the screen according to another embodiment of the present disclosure;

FIG. 3 is a schematic flow chart of a method for controlling a UAV according to another embodiment of the present disclosure;

FIG. 4 is a schematic flow chart of a method for controlling a UAV according to still another embodiment of the present disclosure;

FIG. 5 is a schematic structural diagram of head-mounted display glasses according to an embodiment of the present disclosure;

FIG. 6 is a schematic structural diagram of head-mounted display glasses according to another embodiment of the present disclosure;

FIG. 7 is a schematic structural diagram of head-mounted display glasses according to another embodiment of the present disclosure; and

FIG. 8 is a schematic structural diagram of head-mounted display glasses according to another embodiment of the present disclosure.

## REFERENCE NUMERALS

| | |
|---|---|
| 1: top view of the VR glasses | 2: top view of the user's head |
| 3: rotation direction of the user's head | 4: screen of the VR glasses |
| 5: movable mark on the screen | 6: side view of the VR glasses |
| 7: side view of the user's head | 8: movement direction of the user's head |
| 9: screen of the VR glasses | 10: movable mark on the screen |
| 11: cursor | 12: object to be followed |
| 13: cursor position | 14: cursor position |
| 15: dashed box | 50: head-mounted display glasses |
| 51: processor | 52: screen |
| 53: inertial measurement unit (IMU) | 54: receiver |
| 55: eye sensor | 56: transmitter |

## DETAILED DESCRIPTION OF THE EMBODIMENTS

Technical solutions in the embodiments of the present disclosure are clearly described below with reference to the accompanying drawings of the present disclosure. Apparently, the described embodiments are merely some but not all of the embodiments of the present disclosure. All other embodiments obtained by a person of ordinary skill in the art based on the embodiments of the present disclosure without creative efforts shall fall within the scope of the present disclosure.

It should be noted that, when a component is referred to as being "fixed to" another component, the component can be directly fixed to the other component or an intermediate component may exist. When a component is regarded to be "connected" to another component, the component can be directly connected to the other component or an intermediate component may exist.

Unless otherwise defined, all technical and scientific terms used herein have the same meanings as commonly understood by one of ordinary skill in the art to which the present disclosure belongs. The terminology used herein to describe the present disclosure is for the purpose of describing particular embodiments only, and is not intended to limit the present disclosure. As used herein, the term "and / or" includes any and all combinations of one or more of the associated listed items.

In the following, certain embodiments of the present disclosure are described in detail with reference to the accompanying drawings. Unless a conflict exists, the following embodiments and characteristics of the embodiments can be combined.

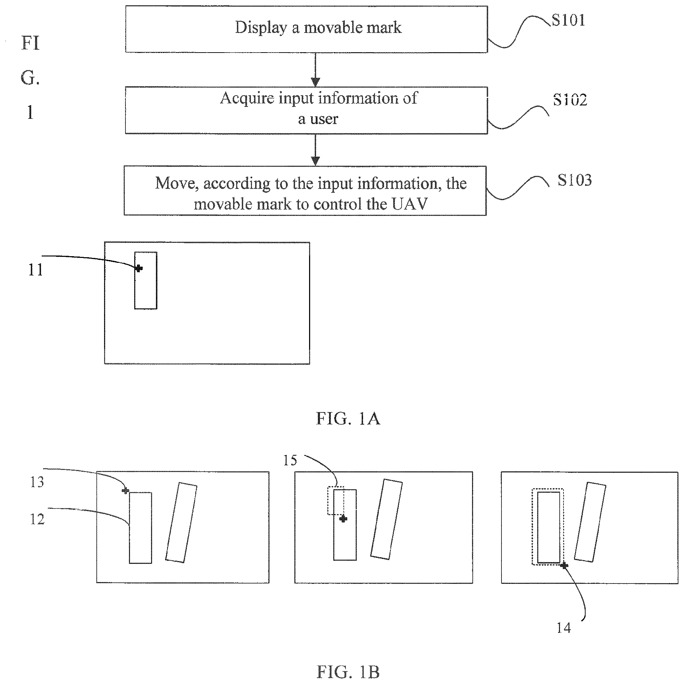

One aspect of the present disclosure provides a method for controlling an unmanned aerial vehicle (UAV). FIG. 1 is a schematic flow chart of a UAV control method according to an embodiment of the present disclosure. An executing subject of the embodiment may be a UAV control terminal for controlling the UAV. The UAV control terminal may include, but not limited to, head-mounted display glasses (such as VR glasses, VR helmet, etc.), a mobile phone, a remote control (such as a remote control with a display), a smart bracelet, a tablet, or the like. The UAV may operate in different modes including, but not limited to, pointing flight mode, smart follow mode, camera focus mode, or the like.

In the pointing flight mode, a user may select a flight target (destination) by clicking on a point or an area on a display device (such as a screen) of the UAV control terminal, and the UAV may fly toward the selected flight target.

In the smart follow mode, a user can control the UAV to fly and follow a movable object by selecting the movable object (such as a human being, an animal, etc.) on a display device (such as a screen) of the UAV control terminal.

In the camera focus mode, a user can control an image device (such as a camera) of the UAV to focus by clicking on a point or an area on the display device (such as a screen) of the UAV control terminal.

As shown in FIG. 1, according to an embodiment of the present disclosure, the method may comprise:

Step S101: displaying a movable mark.

In this embodiment, the UAV control terminal may be a virtual reality (VR) head-mounted display device. Consistent with the embodiment, the method is applicable to control the UAV by using the virtual reality head-mounted display device. The virtual reality head-mounted display device may include virtual reality (VR) glasses, a VR header, or the like. A user wears the VR glasses, which includes a movable mark displayed on its screen. In some examples, the movable mark may include a cursor, and the cursor can be moved on the screen of the VR glasses.

Step S102: acquiring input information.

In this embodiment, the VR glasses may acquire user input information, which may be posture information of the user, or may be direction information for moving the movable mark input by the user via an input device. The VR glasses are equipped with an Inertial Measurement Unit (IMU), and the IMU can sense position and posture of the VR glasses. When the user wears the VR glasses, the VR glasses can obtain the posture information of the user through the IMU. Specifically, the IMU may be configured to sense head posture information of the user. The posture information may include at least one of a pitch angle or a yaw angle. The VR glasses may be configured to control the position of the cursor on the screen according to the posture information of the user's head sensed by the IMU. From the user's viewpoint, the user can control the cursor to move on the screen by turning his/her head.

In addition, the VR glasses may also be equipped with a sensor, for example an eye tracker, for sensing binocular movement of the user and eye (such as eyeballs) change. The VR glasses may obtain the posture information of the user through the sensor. The VR glasses may control the movement of the cursor on the screen based on the binocular movement of the user and the eye change sensed by the sensor. From the user's viewpoint, the user can control the movement of the cursor on the screen through the binocular movement and the eye change.

In addition, the VR glasses may also be coupled to an input device, which may include at least one of the following: a five-dimension keyboard, a joystick, or a touch screen. The VR glasses and the input devices may be in wired connection (such as cable) or wireless connection (such as Wifi, Bluetooth, etc.). In some embodiments, the VR glasses may include a remote control. The remote control may be provided with a five-dimension keyboard. The VR glasses may control the cursor to move on the screen according to the input information of a direction generated by the user clicking the up, down, left and right keys of the five-dimension keyboard. The VR glasses may also be configured to control the cursor to move on the screen according to the input information indicating the direction generated by the user turning the joystick. The VR glasses may also be configured to control the cursor to move on the screen according to the input information generated by the user sliding or touching operation on the touch screen.

In addition, the VR glasses may include a touch pad on a frame thereof, and the user can also manipulate the touch pad to control the cursor to move on the screen to move.

In addition, a virtual keyboard may be displayed on the screen of the VR glasses. The virtual keyboard may be similar to the five-dimension keyboard, including virtual buttons of four directions of up, down, left, and right, and a virtual button indicating confirmation. The user may also control the cursor to move on the screen through operations on the virtual keyboard by the user.

Step S103: moving, according to the input information, the movable mark to control the UAV.

It can be seen from the above steps that the VR glasses may be configured to control the cursor to move on the screen according to the user's posture information, and may also be configured to control the cursor to move on the screen according to the direction information for moving the movable mark input by the user through the input device.

The VR glasses can convert movement information of the cursor on the screen into an instruction of the user for controlling the UAV through the VR glasses. For example, a movement of the cursor to the right on the screen controls the UAV to fly to the right. In some embodiments, the VR glasses can convert the movement information of the cursor on the screen into an instruction of the user to control an onboard device of the UAV through the VR glasses. For example, a movement of the cursor to the right on the screen controls an image device (such as a camera) of the UAV to move to the right.

In addition, a user interface is displayed on the screen of the VR glasses, and the VR glasses can control the UAV to enter the smart follow mode, the pointing flight mode, or the camera focus mode according to a user operation on the user interface. A specific implementation may be that the user interface includes icons, such as a "pointing flight" icon, a "smart follow" icon, a "camera focus" icon and the like, for controlling the UAV. The VR glasses may be configured to control the cursor to move on the screen according to the user's head rotation, eye movement, click on the up, down, left, or right key of the five-dimension keyboard, turning of the joystick, touching/sliding on the touch screen, or touching/sliding on the touch pad, etc. When the cursor moves to a corresponding icon, the user confirms selection of the icon. The VR glasses may be configured to control the UAV to enter a mode corresponding to the icon in response to confirmation information input by the user. The user can confirm the selection of the icon by any of the following manners: clicking the confirmation key of the five-dimension keyboard, clicking the touch screen, clicking the touch pad, stopping eye rotation for a predetermined period of time, blinking eye continuously, keeping the cursor on the icon for a predetermined period of time, clicking a virtual key, operating the joystick, etc..

For example, the VR glasses may be configured to control the cursor to move on the screen according to the rotation direction of the user's head. When the cursor moves to the "pointing flight" icon, the user confirms to select the "pointing flight" icon by clicking the confirmation key of the five-dimension keyboard or uses another method of confirming a target disclosed in the present disclosure. The VR glasses may be configured to control the UAV to enter the pointing flight mode according to the user's selection instruction. At this time, the user interface displays a "pointing flight" interface. As shown in FIG. 1A, the screen of the VR glasses displays an image (such as an image captured by the UAV). The user again, through the head rotation, eye movement, clicking on the up, down left, or right key of the five-dimension keyboard, turning the joystick, touching/sliding on the touch screen, touching/sliding on the touch pad, etc., controls the cursor 11 to move on the screen. When the cursor moves to a target point desired by the user, the target point can be selected. The manner in which the user selects a target point is consistent with the manner in which the user selects an icon, and details are not described herein again. The VR glasses may be configured to transmit location information of the target point selected by the user to the UAV so that, in response, the UAV can fly to a designated position corresponding to the target point. That is, the smart flight mode is realized in which the UAV can fly to where the user points.

In another example, the VR glasses may be configured to control the cursor to move on the screen according to the user's eye rotation. When the cursor moves to the "smart follow" icon, the user confirms, by clicking on the touch pad or using another method for confirming a target disclosed in the present disclosure, to select the "smart follow" icon. The VR glasses may be configured to control the UAV to enter the smart follow mode according to the user's selection instruction. At this moment, the user interface displays a "smart follow" control interface, as shown in FIG. 1B, in which the VR glasses are configured to display an object 12 to be followed on the screen. The object 12 to be followed can be selected through a box selection. The manner of the box selection may be implemented as follows: the user moving the cursor to a starting point, such as a cursor position 13 shown in FIG. 1B, of a desired rectangular box by turning the head; pressing the confirmation key of the five-dimension keyboard, or clicking the touch pad to confirm the selection of the starting point, or using another method of confirming a target disclosed in the present disclosure; and then selecting an ending point in the same manner, as shown in Figure 1B, in which a cursor position 14 is shown and a dashed box 15 indicates a rectangular box in the box selection operation.

In addition, the UAV camera focus mode may be realized by the same manner as that of the pointing flight mode, and thus details are not described herein again.

In this embodiment, the input information is obtained through the control terminal of the UAV. The input information may be the posture information of the user or may be the direction information for moving the cursor input by the user through the input device. That is, the UAV control terminal may be configured to control the movement of the cursor on the screen according to the user posture information or according to the direction information for moving the cursor input by the user through the input device. After the cursor moves to the target point on the screen, according to the selection instruction input by the user, the target point is selected, and the UAV is controlled to enter the corresponding flight mode or control mode, so as to realize the control manner of the UAV, such as the pointing flight mode, the smart follow mode, the camera focus mode, or the like.

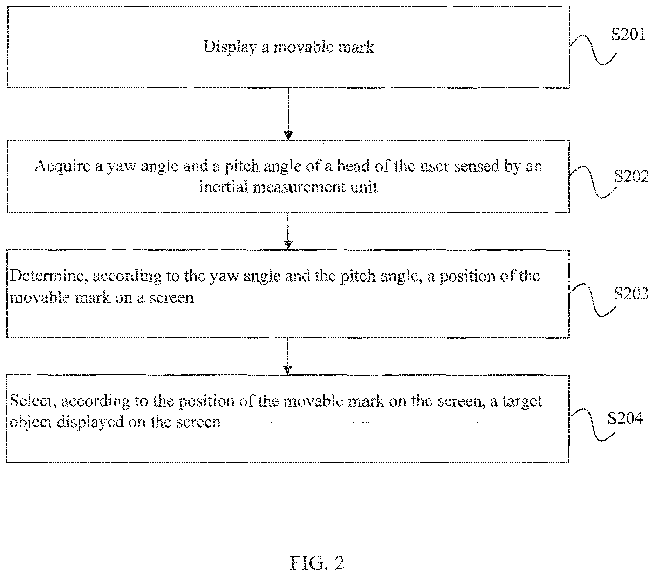

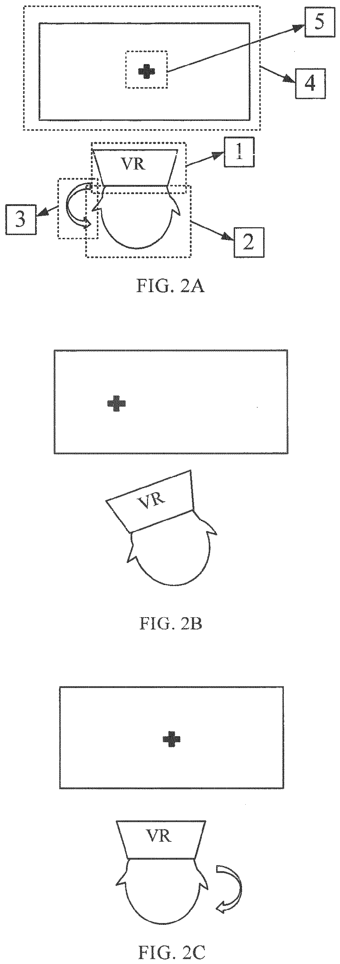

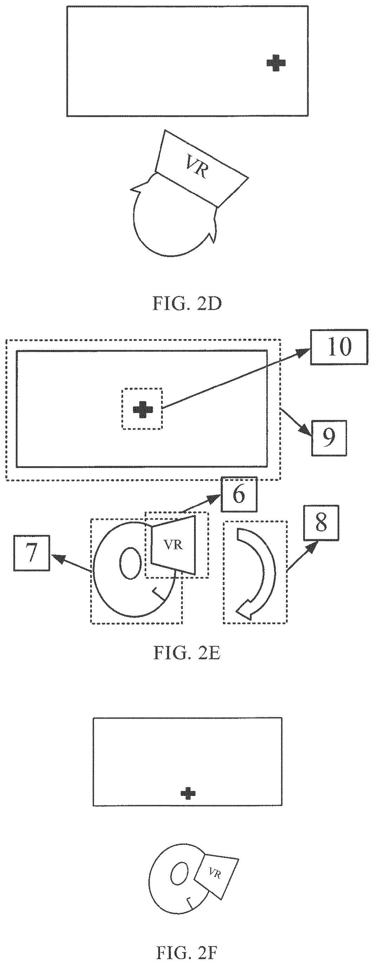

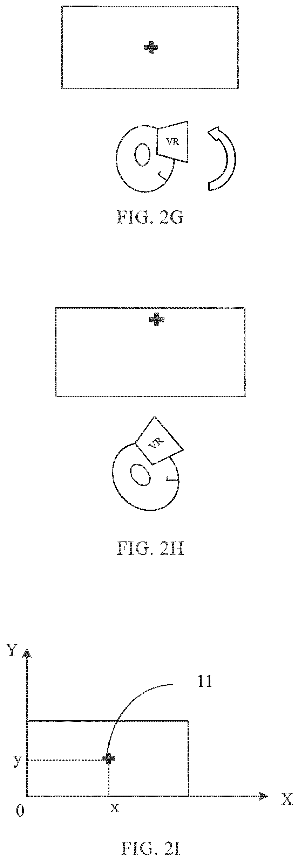

The present disclosure provides a UAV control method. FIG. 2 is a schematic flow chart of a UAV control method according to another embodiment of the present disclosure. As shown in FIG. 2, on the basis of the embodiment shown in FIG. 1, the method in this embodiment may comprise:

Step S201: displaying a movable mark.
Step S201 is the same as step S101, and details are not described herein again.
Step S202: acquiring a yaw angle and a pitch angle of a user's head sensed by an inertial measurement unit.

The VR glasses are equipped with the Inertial Measurement Unit (IMU), and the IMU may be configured to sense position and posture of the VR glasses. The VR glasses may be configured to acquire the user posture information through the IMU when the user wears the VR glasses. Specifically, the IMU may be configured to sense the posture information of the user's head, and the posture information may include at least one of the following: the yaw angle and the pitch angle.

Step S203: determining, according to the yaw angle and the pitch angle, a position of the movable mark on the screen.

When the user wears the VR glasses, taking the screen of the VR glasses perpendicular to the ground as an example, when the user turns his/her head left or right, the IMU may sense the yaw angle of the user's head. When the user's head tilts up or down, the IMU may sense the pitch angle of the user's head. The VR glasses may be configured to control the position of the movable marker (such as a cursor) on the screen based on the yaw and pitch angles of the user's head sensed by the IMU.

The way of the VR glasses controlling the position of the movable mark on the screen according to the yaw angle and the pitch angle of the user's head sensed by the IMU may be specifically realized as follows: determining, according to the yaw angle, a horizontal coordinate of the movable mark on the screen; and determining, according to the pitch angle, a vertical coordinate of the movable mark on the screen. In some embodiments, the VR glasses may be configured to control, according to the user's head turning left or right, the cursor to move in a horizontal direction of the screen, and/or control, according to a pitch-direction movement of the user's head, the cursor to move in a vertical direction of the screen.

As shown in FIG. 2A, a dashed box 1 indicates a top view of the VR glasses, a dashed box 2 indicates a top view of the user's head, a dashed box 3 indicates a rotation direction of the user's head, a dashed box 4 indicates the screen of the VR glasses, and a dashed box 5 indicates the movable mark on the screen. As shown in FIG. 2A, the user's head turns to the left, so the VR glasses control the cursor to move to the left in the horizontal direction of the screen. The result of the cursor moving to the left in the horizontal direction of the screen is shown in FIG. 2B.

In addition, as shown in FIG. 2C, the user's head turns to the right, so the VR glasses control the cursor to move to the right in the horizontal direction of the screen. The result of the cursor moving to the right in the horizontal direction of the screen is shown in FIG. 2D.

As shown in FIG. 2E, a dashed box 6 represents a side view of the VR glasses, a dashed box 7 represents a side view of the user's head, a dashed box 8 represents a movement direction of the user's head, a dashed box 9 represents the screen of the VR glasses, and a dashed box 10 represents the removable mark on the screen. As shown in FIG. 2E, the user's head rotates downward, i.e., the user's head is in a bird's eye view state. The VR glasses control the cursor to move downward in the vertical direction of the screen. The result of the cursor moving downward in the vertical direction of the screen is shown in FIG. 2F.

In addition, as shown in FIG. 2G, the user's head tilts upward, i.e., the user's head is in a looking-up state, the VR glasses control the cursor to move upward in the vertical direction of the screen. The result of the cursor moving upward in the vertical direction of the screen is shown in FIG. 2H.

Specifically, the VR glasses determine the horizontal coordinate of the cursor on the screen according to the yaw angle, and determine the vertical coordinate of the cursor on the screen according to the pitch angle. The VR glasses can determine the horizontal coordinate of the cursor on the screen according to the yaw angle in two ways, and can determine the vertical coordinate of the cursor on the screen according to the pitch angle in two methods, as described below.

Method 1:

Determining, according to the yaw angle of the user's head sensed by the IMU for once, the horizontal coordinate of the movable mark on the screen; and determining, according to the pitch angle of the user's head sensed by the IMU for once, the vertical coordinate of the movable mark on the screen.

As shown in FIG. 2I, a lower left corner of the screen of the VR glasses is taken as the origin of the coordinate system. A horizontal arrow passing through the origin represents the X-axis direction, and a vertical arrow passing through the origin represents the Y-axis direction. Reference number 11 indicates the cursor, x indicates a horizontal coordinate of the cursor 11 on the screen in the X-axis direction, and y indicates a vertical coordinate of the cursor 11 on the screen in the Y-axis direction. The coordinate position of the cursor on the screen can be specifically determined using the following equations (1) and (2):

$$x = \mathrm{screenW} / 2 + \mathrm{yaw} * \mathrm{factorX} \qquad (1)$$

where "x" represents the horizontal coordinate of the cursor in the X-axis direction of the screen, "screenW" represents the number of pixels of the screen in the X-axis direction (the width of the screen), "yaw" represents the yaw angle of the user's head obtained from a one-time sampling by the IMU, and constant "factorX" represents a conversion coefficient in the X-axis direction of the screen.

$$y = screenH\ /\ 2 + pitch * factorY \qquad (2)$$

where "y" represents the vertical coordinate of the cursor in the Y-axis direction of the screen, "screenH" represents the number of pixels of the screen in the Y-axis direction (the length of the screen), "pitch" represents the pitch angle of the user's head obtained from a one-time sampling by the IMU, and constant "factorY" represents a conversion coefficient in the Y-axis direction of the screen.

According to the equations (1) and (2), assuming that values of {yaw, pitch} in the current IMU sampling are {-33, 21} degrees, both factorX and factorY are -20, and the screen resolution is 1920×1080, the coordinates of the cursor on the screen will be {1620,120}.

Method 2:

Determining, according to an angle difference between two yaw angles of the user's head sensed by the IMU, a coordinate offset of the movable mark in the horizontal direction of the screen; and determining, according to an angle difference between two pitch angles of the user's head sensed by the IMU, a coordinate offset of the movable mark in the vertical direction of the screen. The coordinates of the cursor on the screen can be specifically determined by the following equations (3) and (4):

$$deltaX = deltaYaw * factorX \qquad (3)$$

where "deltaX" represents a coordinate offset of the cursor in the horizontal direction of the screen, "deltaYaw" represents an angle difference between the yaw angle currently collected by the IMU and the yaw angle collected last time, and constant "factorX" represents the conversion coefficient in the X-axis direction of the screen.

$$deltaY = deltaPitch * factorY \qquad (4)$$

where "deltaY" represents a coordinate offset of the cursor in the vertical direction of the screen, "deltaPitch" represents an angle difference between the pitch angle currently collected by the IMU and the pitch angle collected last time, and constant "factorY" represents the conversion coefficient in the Y-axis direction of the screen.

In addition, in some other embodiments, "deltaYaw" may be an angle difference of the yaw angles collected by the IMU at any two times, and "deltaPitch" may be an angle difference of the pitch angles collected by the IMU at any two times.

Step S204: selecting, according to the position of the movable mark on the screen, a target object displayed on the screen.

The VR glasses can determine the coordinates of the cursor on the screen according to the above-described steps. When the user's head turns left or right, up or down, the cursor can move on the screen, and the target object displayed on the screen can be selected through the movement of the cursor on the screen.

In this embodiment, the yaw angle and the pitch angle of the user's head are sensed by the IMU. The VR glasses determine the horizontal coordinate of the cursor on the screen according to the yaw angle, and determine the vertical coordinate of the cursor on the screen according to the pitch angle, to accurately convert the movement information of the user's head to the position information of the cursor on the screen. As such, the accuracy of the detection of the cursor position is improved, and meanwhile, the accuracy of the motion control over the UAV is improved.

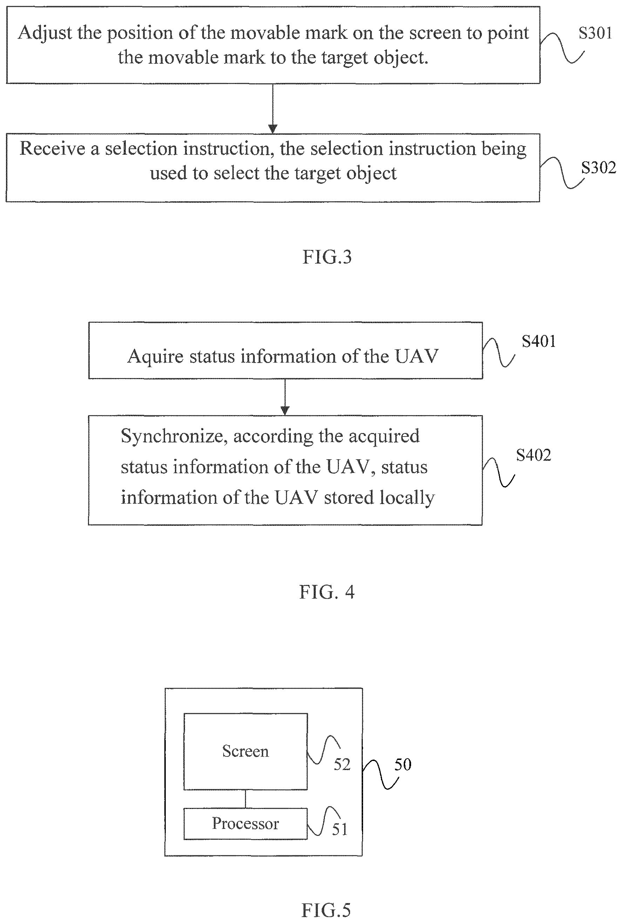

The present disclosure provides a UAV control method. FIG. 3 is a schematic flow chart of a UAV control method according to another embodiment of the present disclosure. As shown in FIG. 3, based on the embodiment shown in FIG. 2, the method for selecting the target object displayed on the screen according to the position of the movable mark on the screen may be implemented by the following steps:

Step S301: adjusting the position of the movable mark on the screen, so as to point the movable mark to the target object.

On the basis of the above embodiments, the cursor can be controlled to move in the horizontal direction of the screen when the user's head turns left or right; and the cursor can be controlled to move in the vertical direction of the screen when the user's head tilts up or down. The VR glasses adjust the position of the cursor on the screen according to the user's head turning left or right, or tilting up or down.

A user interface is displayed on the screen of the VR glasses. The user interface includes icons for controlling the UAV such as a "pointing flight" icon, a "smart follow" icon, a "camera focus" icon and the like. The VR glasses may be configured to control the UAV to enter a mode corresponding to the icon selected by the user. For example, after entering the pointing flight mode, the VR glasses display a map layer or an image on the screen. The user adjusts the position of the cursor on the map layer or the image through the head movement so that the cursor points to the target point on the map layer or the target object on the image screen.

Step S302: receiving a selection instruction input by the user, the selection instruction being used to select the target object.

When the cursor points to the target point on the map layer or the target object on the image screen, the VR glasses receive a selection instruction input by the user, indicating that the user confirms to select the target point on the map layer or the target object on the image screen.

More specifically, the VR glasses receiving the selection instruction as input by the user for selecting the target object can be implemented in the following manners:

1) Receiving the selection instruction input by the user through pressing the confirmation key of the five-dimension keyboard. When the cursor points to the target point or the target object, the user clicks the confirmation key of the five-dimension keyboard. The VR glasses receives the selection instruction input by the user according to the clicking operation of the user. The selection instruction indicates that the user confirms to select the target point or the target object on the screen.

2) Receiving the selection instruction input by the user through clicking on the touch pad. The touch pad can be arranged on the frame of the VR glasses. When the cursor points to the target point or the target object, the user clicks (e.g., single-clicks or double-clicks) the touch pad. The VR glasses receive the selection instruction input by the user according to the user's operation of clicking the tach pad..

3) Receiving the selection instruction input by the user through eye movement. In this embodiment, the VR glasses may also be equipped with a sensor (such as an eye tracker) to sense binocular movement and eye changes of the user. When the cursor points to the target point or the target object, the user may use eye information, such as stopping eye rotation for a predetermined period of time or continuous eye blinking, etc., to indicate selection confirmation of the target point or the target object on the screen.

4) Receiving the selection instruction input by the user through clicking on the touch screen. In addition, the VR glasses can be coupled with the touch screen through a wired or wireless connection, and the user can confirm to select the target point or the target object on the screen by operating the touch screen, such as pressing the touch screen for a predetermined period of time. After the touch screen captures the touching operation of the user, the touch screen may convert the related touching operation into an electrical signal and send the electrical signal to the VR glasses, so that the VR glasses confirm the selection instruction input by the user according to the electrical signal. The user may also confirm the selection of the target point or the target object on the screen by clicking on the touch screen (such as single-click or double-click).

5) Selecting the target object after the movable mark has stayed on the target object for a predetermined period of time. When the cursor points to the target point or the target object, the user keeps his/her head motionless so that the cursor stays on the target point or the target object. When the cursor stays on the target point or the target object for a predetermined time (for example, 3 seconds, 5 Seconds, etc.), the VR glasses confirm that the user selects the target point or the target object.

6) Receiving the selection instruction input by the user through clicking the virtual keyboard. In addition, the virtual keyboard may be displayed on the screen of the VR glasses or outside the screen, and the virtual keyboard may also be used as the confirmation key.

7) Receiving the selection instruction input by the user through operating the joystick. For example, the user may confirm the selection of the target point or the target object on the selection screen by pressing a confirmation key on the joystick.

In addition, the selection instruction may be a click or a box selection.

In this embodiment, the VR glasses are configured to adjust the position of the cursor on the screen according to the movement of the user's head, so as to point the cursor at the target point or the target object desired by the user, and realize the click selection or the box selection of the target point or the target object. It thus enables the user to click-select or box-select via the VR glasses, and addresses the problem where the VR glasses cannot realize a control method, such as "pointing flight" mode, "smart follow" mode, "camera focus" mode, or the like, due to the lack of a touch screen.

The present disclosure provides a UAV control method. FIG. 4 is a schematic flow chart of a UAV control method according to another embodiment of the present disclosure. As shown in FIG. 4, on the basis of any embodiment set forth above, the UAV control method consistent with the present disclosure may comprise:

Step S401: acquiring status information of the UAV.

This embodiment is applicable to a scenario in which the UAV corresponds to a plurality of control devices and the plurality of control devices control the UAV simultaneously. The control device herein may include VR glasses, a smart terminal, a remote control with screen, a smart bracelet, or another device, for controlling the UAV. Since the plurality of control devices can independently control the UAV, when the plurality of control devices simultaneously control the UAV, confusion or mutual interference may be caused. For example, user A holds a smart terminal and controls the UAV to enter a smart follow mode through the smart terminal. After user A selects a target to be followed on the screen of the smart terminal, the UAV enters the smart follow mode and sends an image of the smart follow mode in real time to the smart terminal. User A may watch the smart follow image in real time through the screen of the smart terminal. User B wears VR glasses. If user B is not aware that the UAV is already in the smart follow mode and attempts to control the UAV to enter the smart follow mode via the VR glasses, the smart terminal of user A and the smart terminal of B may have a control conflict. For example, the smart follow image viewed by the user A may be terminated. In order to prevent such problems from occurring, each control device provided in this embodiment needs to acquire the status information of the UAV in real time or periodically. The status information may include flight mode, camera setting information, video playback information and the like.

Each control device can take an initiative to acquire the status information of the UAV, or acquire the status information of the UAV passively. When the control device takes the initiative, the status information of the UAV may be acquired as follows: the control device sends a request for acquiring the status information to the UAV; and the UAV sends the status information to the control device according to the request for acquiring the status information. Passively acquiring the status information of the UAV may be as follows: the UAV broadcasts the status information to each of the control devices. In some embodiments, the UAV periodically broadcasts the status information. Passively acquiring the status information of the UAV may also be realized as follows: after a control device obtains the status information of the UAV, the control device sends the status information to other control devices, and the other control devices passively receive the status information of the UAV.

Step S402: Synchronizing, according the acquired status information of the UAV, status information of the UAV stored locally.

After each control device obtains the status information of the UAV, the status information of the UAV stored locally is synchronized. For example, the smart flight mode of the UAV locally stored by the smart terminal is "pointing flight," and the current smart flight mode of the UAV is "smart follow," then the smart terminal needs to update the smart flight mode of the UAV stored locally to "smart follow," and the smart terminal is passively switched to the "smart follow" control interface so as to prompt a user holding the smart terminal that another control device has already configured the UAV into the smart follow mode.

In addition, the operations of "pointing flight" and "remote playback of UAV video" are similar to "smart follow," and descriptions thereof are not repeated here.

In this embodiment, the status information of the UAV is acquired respectively by the plurality of control devices, and the status information of the UAV stored locally is synchronized according to the acquired status information of the UAV so that the status information of the UAV stored by each control device is synchronized with the UAV's current status information to avoid the control confusion or mutual interference when multiple control devices simultaneously control the UAV.

The present disclosure also provides head-mounted display glasses. The head-mounted display glasses provided in this embodiment may specifically be a UAV control terminal in the foregoing method embodiments. FIG. 5 is a schematic structural diagram of head-mounted display glasses according to an embodiment of the present disclosure. As shown in FIG. 5, the head-mounted display glasses 50 include at least one processor 51 and a screen 52. The screen is configured to display a movable mark. The at least one processor 51 is configured to obtain user input information and, according to the input information, move the movable mark to control the UAV.

Specifically, the at least one processor 51 may include, but is not limited to, a microcontroller, a reduced instruction set computer (RISC), an application specific integrated circuit (ASIC), an application-specific instruction-set processor (ASIP), a central processing unit (CPU), a physics processing unit (PPU), a digital signal processor (DSP), a field programmable gate array (FPGA), or the like.

In some embodiments, the head-mounted display glasses may include VR glasses, a VR helmet, or the like.

In this embodiment, the input information is posture information of a user, or the input information is direction information for moving the movable mark input by the user via an input device.

The input device may include at least one of the following: a five-dimension keyboard, a joystick, a touch pad, a touch screen, or a virtual keyboard.

The posture information may include at least one of a yaw angle or a pitch angle.

The specific principles and implementation manners of the head-mounted display glasses provided by the present disclosure are similar to those shown in FIG. 1, and details are thus not described herein again.

In this embodiment, the input information of the user is obtained through the head-mounted display glasses. The input information may be the user's posture information or may be the direction information for moving the cursor input by the user through the input device. That is, the head-mounted display glasses can control the cursor to move on the screen according to the posture information of the user, or according to the direction information for moving the cursor input by the user through the input device. After the cursor moves to the target point on the screen, the target point is selected according to the selection instruction input by the user, and the UAV is controlled to enter the corresponding flight mode or control mode, so as to realize the control method, such as pointing flight, smart follow, camera focus, etc.

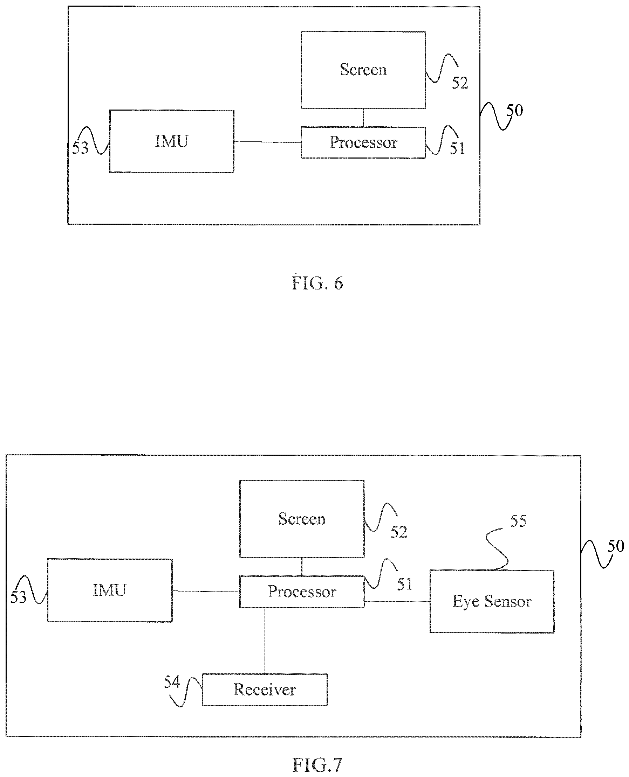

The embodiment of the present disclosure provides head-mounted display glasses. FIG. 6 is a schematic structural diagram of head-mounted display glasses according to another embodiment of the present disclosure. As shown in FIG. 6, on the basis of FIG. 5, the head-mounted display glasses 50 further comprises an inertial measurement unit (IMU) 53 coupled to the at least one processor 51. The IMU 53 is configured to sense the yaw angle and the pitch angle of the user's head, and send the yaw angle and the pitch angle of the user's head to the at least one processor 51.

The at least one processor 51 is configured to determine a position of the movable mark on the screen based on the yaw angle and the pitch angle, and, based on the position of the movable mark on the screen, select a target object displayed on the screen.

Specifically, the at least one processor 51 is configured to determine, according to the yaw angle, a coordinate of the movable mark in a horizontal direction of the screen; and determine, according to the pitch angle, a coordinate of the movable mark in a vertical direction of the screen.

In one embodiment, the at least one processor 51 is configured to determine, according to a yaw angle of the user's head sensed by the IMU for once, the coordinate of the movable mark in the horizontal direction of the screen; and determine, according to a pitch angle of the user's head sensed by the IMU for once, the coordinate of the movable mark in the vertical direction of the screen.

In another embodiment, the at least one processor 51 is configured to determine, according to an angle difference between two yaw angles of the user's head sensed by the IMU, a coordinate offset of the movable mark in the horizontal direction of the screen; determine, according to an angle difference between two pitch angles of the user's head sensed by the IMU, a coordinate offset of the movable mark in the vertical direction of the screen.

The specific principles and implementation manners of the head-mounted display glasses provided in the embodiments of the present disclosure are similar to those shown in FIG. 2, and details are not described herein again.

Consistent with the present disclosure, the yaw angle and the pitch angle of the user's head are sensed through the IMU. The at least one processor is configured to determine the horizontal coordinate of the cursor on the screen according to the yaw angle, and determine the vertical coordinate of cursor on the screen according to the pitch angle. The user's head movement information is accurately converted to the position information of the cursor on the screen, which improves the accuracy of the cursor position detection and the accuracy of the motion control over the UAV.

One embodiment of the present disclosure provides head-mounted display glasses. FIG. 7 is a schematic structural diagram of head-mounted display glasses according to another embodiment of the present disclosure. As shown in FIG. 7, on the basis of FIG. 6, the at least one processor 51 is configured to adjust the position of the movable mark on the screen, so as to point the movable mark to the target object. The head-mounted display glasses 50 further comprise a receiver 54 coupled to the at least one processor 51, wherein the receiver 54 is configured to receive a selection instruction, the selection instruction being used to select the target object.

In some embodiments, the receiver 54 receiving the selection instruction for selecting the target object comprises one of: receiving the selection instruction input by the user through pressing a confirmation key of a five-dimension keyboard; receiving the selection instruction input by the user through clicking on a touch pad; receiving the selection instruction input by the user through eye movement; receiving the selection instruction input by the user through clicking on a touch screen; selecting the target object after the movable mark has stayed on the target object for a period of time; receiving the selection instruction input by the user through clicking a virtual keyboard; or receiving the selection instruction input by the user through operating a joystick.

In some embodiments, the head-mounted display glasses 50 further comprise an eye sensor 55 coupled to the at least one processor 51. The eye sensor 55 is configured to sense eye movement of the use's eye to obtain movement information and send the movement information to the at least one processor 51. The at least one processor 51 is configured to determine, according to the movement information, the selection instruction.

The selection instruction includes a click selection or a box selection.

The specific principles and implementation manners of the head-mounted display glasses according to the embodiments of the present disclosure are similar to those shown in FIG. 3, and details are not described herein again.

Consistent with this embodiment, the VR glasses are configured to adjust the position of the cursor on the screen according to the movement of the user's head, so as to point the cursor at the target point or the target object desired by the user, and realize the click selection or the box selection of the target point or the target object. It thus enables the user to click-select or box-select via the VR glasses, and addresses the problem where the VR glasses cannot select a control method, such as "pointing flight" mode, "smart follow" mode, "camera focus" mode or the like, due to the lack of a touch screen.

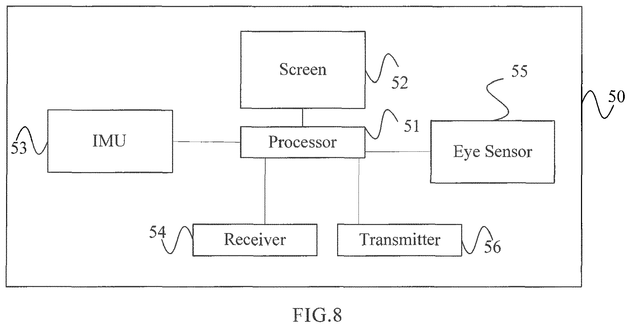

One embodiment of the present disclosure provides head-mounted display glasses. FIG. 8 is a schematic structural diagram of head-mounted display glasses according to another embodiment of the present disclosure. As shown in FIG. 8, on the basis of any of the above-described embodiments of head-mounted display glasses, taking the embodiment shown in FIG. 7 as an example, the at least one processor 51 is further configured to acquire status information of the UAV and synchronize, according to the acquired status information of the UAV, status information of the UAV stored locally.

In addition, the head-mounted display glasses 51 further comprises a transmitter 56 coupled to the at least one processor 51. The transmitter 56 is configured to send a request for acquiring the status information to the UAV. The receiver 54 is further configured to receive the status information sent by the UAV.

In one embodiment, the receiver 54 is further configured to receive the status information broadcast by the UAV.

In another embodiment, the receiver 54 is further configured to receive the status information of the UAV sent by another UAV control terminal, and the other UAV control terminal is configured to control the UAV and receive the status information broadcast by the UAV.

The specific principles and implementation manners of the head-mounted display glasses provided by the embodiments of the present disclosure are similar to those shown in FIG. 4, and are not described herein again.

In this embodiment, the status information of the UAV is acquired respectively by the plurality of control devices, and the status information of the UAV stored locally is synchronized according to the acquired status information of the UAV so that the status information of the UAV stored by each control device is synchronized with the UAV's current status information to avoid the control confusion or mutual interference when multiple control devices simultaneously control the UAV.

One embodiment of the present disclosure provides a UAV control system. The UAV control system provided in this embodiment comprises a UAV and head-mounted display glasses described in the foregoing embodiments. The head-mounted display glasses are configured to control the UAV.

The specific principles and implementation manners of the head-mounted display glasses provided in the embodiments of the present disclosure are similar to those in the foregoing embodiments, and are not described herein again.

In this embodiment, the input information is obtained through a control terminal of the UAV. The input information may be the posture information of a user or may be the direction information for moving the cursor as input by the user through the input device. That is, the UAV control terminal may be configured to control, according to the user posture information or according to the direction information for moving the cursor as input by the user through the input device, the movement of the cursor on the screen. After the cursor moves to the target point on the screen, according to the selection instruction input by the user, the target point is selected, and the UAV is controlled to enter the corresponding flight mode or control mode, so as to realize a control manner of the UAV, such as the pointing flight mode, the smart follow mode, the camera focus mode, or the like.

In the several embodiments provided by the present disclosure, it should be understood that the disclosed apparatus and method may be implemented in other manners. For example, the apparatus embodiments described above are merely illustrative. For example, the unit division is merely logical function division and there may be other division in actual implementation. For example, multiple units or components may be combined or integrated into another system, or some features can be omitted or not be executed. In addition, the mutual coupling or the direct coupling or the communication connection as shown or discussed may be indirect coupling or communication connection through some interfaces, devices or units, and may be in electrical, mechanical or other forms.

The units described as separate components may or may not be physically separated. The components displayed as units may or may not be physical units, that is, may be located in one place or may also be distributed to multiple network units. Some or all of the units may be selected according to actual needs to achieve the objectives of the solution in the disclosure.

In addition, each functional unit in each embodiment of the present disclosure may be integrated into one processing unit, or each unit may exist alone physically, or two or more units may be integrated in one unit. The above-mentioned integrated unit can be implemented in the form of hardware or in the form of hardware plus software functional unit.

The above-described integrated unit implemented in the form of a software functional unit may be stored in a computer-readable storage medium. The software function unit is stored in a storage medium and includes several instructions for enabling a computer device (which may be a personal computer, a server, a network device, etc.) or a processor to execute some steps of the method according to each embodiment of the present disclosure. The foregoing storage medium includes a medium capable of storing program code, such as a USB flash disk, a removable hard disk, a read-only memory (ROM), a random access memory (RAM), a magnetic disk, an optical disc, or the like.

Those skilled in the art may clearly understand that, for convenience and brevity of description, the division of the foregoing functional modules is only used as an example. In practical applications, however, the above function allocation may be performed by different functional modules according to actual needs. That is, the internal structure of the device is divided into different functional modules to accomplish all or part of the functions described above. For the working process of the foregoing apparatus, reference may be made to the corresponding process in the foregoing method embodiments, and details are not described herein again.

Finally, it should be noted that the foregoing embodiments are merely intended for describing the technical solutions of the present disclosure, but not to limit the present disclosure. Although the present disclosure is described in detail with reference to the foregoing embodiments, it should be understood by those of ordinary skill in the art that the technical solutions described in the foregoing embodiments may still be modified, or a part or all of the technical features may be equivalently replaced without departing from the spirit and scope of the present disclosure. As a result, these modifications or replacements do not make the essence of the corresponding technical solutions depart from the scope of the technical solutions of the present disclosure.

**Claims**

1. A method for controlling an unmanned aerial vehicle (UAV), comprising:

   displaying a movable mark;
   acquiring input information of a user; and
   moving, according to the input information, the movable mark to control the UAV.

2. The method of claim 1, wherein the input information includes posture information of the user.

3. The method of claim 1, wherein the input information includes direction information for moving the movable mark input by the user through an input device.

4. The method of claim 3, wherein the input device includes at least one of a five-dimension keyboard, a joystick, a touch pad, a touch screen, or a virtual keyboard.

5. The method of claim 2, wherein the posture information includes at least one of a yaw angle or a pitch angle.

6. The method of claim 5, wherein acquiring the input information includes acquiring the yaw angle and the pitch angle of a head of the user sensed by an inertial measurement unit (IMU).

7. The method of claim 6, wherein moving, according to the input information, the movable mark to control the UAV includes:

   determining, according to the yaw angle and the pitch angle, a position of the movable mark on a screen; and
   selecting, according to the position of the movable mark on the screen, a target object displayed on the screen.

8. The method of claim 7, wherein determining, according to the yaw angle and the pitch angle, the position of the movable mark on the screen includes:

   determining, according to the yaw angle, a coordinate of the movable mark in a horizontal direction of the screen; and
   determining, according to the pitch angle, a coordinate of the movable mark in a vertical direction of the screen.

9. The method of claim 8, wherein:

   determining, according to the yaw angle, the coordinate of the movable mark in the horizontal direction of the screen includes: determining, according to the yaw angle of the head of the user sensed by the IMU for once, the coordinate of the movable mark in the horizontal direction of the screen; and

determining, according to the pitch angle, the coordinate of the movable mark in the vertical direction of the screen includes: determining, according to the pitch angle of the head of the user sensed by the IMU for once, the coordinate of the movable mark in the vertical direction of the screen.

10. The method of claim 8, wherein:

determining, according to the yaw angle, the coordinate of the movable mark in the horizontal direction of the screen includes: determining, according to an angle difference between two yaw angles of the head of the user sensed by the IMU, a coordinate offset of the movable mark in the horizontal direction of the screen; and determining, according to the pitch angle, the coordinate of the movable mark in the vertical direction of the screen includes: determining, according to an angle difference between two pitch angles of the head of the user sensed by the IMU, a coordinate offset of the movable mark in the vertical direction of the screen.

11. The method of claim 7, wherein selecting, according to the position of the movable mark on the screen, the target object displayed on the screen includes:

adjusting the position of the movable mark on the screen to point the movable mark to the target object; and receiving a selection instruction input by the user, the selection instruction being used to select the target object.

12. The method of claim 11, wherein receiving the selection instruction includes:

receiving the selection instruction input by the user through pressing a confirmation key of a five-dimension keyboard; or
receiving the selection instruction input by the user through clicking on a touch pad; or
receiving the selection instruction input by the user through eye movement; or
receiving the selection instruction input by the user through clicking on a touch screen; or
selecting the target object after the movable mark has stayed on the target object for a period of time; or
receiving the selection instruction input by the user through clicking a virtual keyboard; or
receiving the selection instruction input by the user through operating a joystick.

13. The method of claim 12, wherein the selection instruction includes a click selection or a box selection.

14. The method of any one of claims 1 to 13, further comprising:

acquiring status information of the UAV; and
synchronizing, according the acquired status information of the UAV, status information of the UAV stored locally.

15. The method of claim 14, wherein acquiring the status information of the UAV includes:

sending a request for acquiring the status information to the UAV; and
receiving the status information sent by the UAV.

16. The method of claim 14, wherein acquiring the status information of the UAV includes receiving the status information broadcast by the UAV.

17. Head-mounted display glasses for controlling an unmanned aerial vehicle (UAV), comprising: at least one processor and a screen, wherein:

the screen is configured to display a movable mark; and
the at least one processor is configured to acquire input information of a user, and move, according to the input information, the movable mark to control the UAV.

18. The head-mounted display glasses of claim 17, wherein the input information includes posture information of the user.

19. The head-mounted display glasses of claim 17, wherein the input information includes direction information for moving the movable mark input by the user through an input device.

20. The head-mounted display glasses of claim 19, wherein the input device includes at least one of a five-dimension keyboard, a joystick, a touch pad, a touch screen, or a virtual keyboard.

21. The head-mounted display glasses of claim 18, wherein the posture information includes at least one of a yaw angle or a pitch angle.

22. The head-mounted display glasses of claim 21, further comprising an inertial measurement unit (IMU) coupled to the at least one processor, wherein the IMU is configured to sense the yaw angle and the pitch angle of a head of the user, and send the yaw angle and the pitch angle of the head of the user to the at least one processor.

23. The head-mounted display glasses of claim 22, wherein the at least one processor is configured to:

determine, according to the yaw angle and the pitch angle, a position of the movable mark on a screen; and
select, according to the position of the movable mark on the screen, a target object displayed on the screen.

24. The head-mounted display glasses of claim 23, wherein the at least one processor is configured to:

determine, according to the yaw angle, a coordinate of the movable mark in a horizontal direction of the screen; and
determine, according to the pitch angle, a coordinate of the movable mark in a vertical direction of the screen.

25. The head-mounted display glasses of claim 24, wherein the at least one processor is configured to:

determine, according to the yaw angle of the head of the user sensed by the IMU for once, the coordinate of the movable mark in the horizontal direction of the screen; and
determine, according to the pitch angle of the head of the user sensed by the IMU for once, the coordinate of the movable mark in the vertical direction of the screen.

26. The head-mounted display glasses of claim 24, wherein the at least one processor is configured to:

determine, according to an angle difference between two yaw angles of the head of the user sensed by the IMU, a coordinate offset of the movable mark in the horizontal direction of the screen; and
determine, according to an angle difference between two pitch angles of the head of the user sensed by the IMU, a coordinate offset of the movable mark in the vertical direction of the screen.

27. The head-mounted display glasses of claim 23, wherein:

the at least one processor is configured to adjust the position of the movable mark on the screen to point the movable mark to the target object; and
the head-mounted display glasses further comprise a receiver coupled to the at least one processor, wherein the receiver is configured to receive a selection instruction, the selection instruction being used to select the target object.

28. The head-mounted display glasses of claim 27, wherein the receiver receiving the selection instruction input by the user for selecting the target object comprises:

receiving the selection instruction input by the user through pressing a confirmation key of a five-dimension keyboard; or
receiving the selection instruction input by the user through clicking on a touch pad; or
receiving the selection instruction input by the user through eye movement; or
receiving the selection instruction input by the user through clicking on a touch screen; or
selecting the target object after the movable mark has stayed on the target object for a period of time; or
receiving the selection instruction input by the user through clicking a virtual keyboard; or
receiving the selection instruction input by the user through operating a joystick.

29. The head-mounted display glasses of claim 27, further comprising an eye sensor coupled to the at least one processor, wherein:

the eye sensor is configured to sense eye movement of eyes of the user to obtain movement information, and send the movement information to the at least one processor; and
the at least one processor is configured to determine, according to the movement information, the selection instruction.

30. The head-mounted display glasses of claim 27, wherein the selection instruction includes a click selection or a box selection.

31. The head-mounted display glasses of any one of claims 17 to 30, wherein the at least one processor is further configured to:

acquire status information of the UAV; and
synchronize, according to the acquired status information of the UAV, status information of the UAV stored locally.

32. The head-mounted display glasses of claim 31, further comprising a transmitter coupled to the at least one processor, wherein:

the transmitter is configured to send a request for acquiring the status information to the UAV; and
the receiver is further configured to receive the status information sent by the UAV.

33. The head-mounted display glasses of claim 31, wherein the receiver is further configured to receive the status information broadcast by the UAV.

34. The head-mounted display glassed of claim 31, wherein the receiver is further configured to receive the status information of the UAV sent by another UAV control terminal, and the other UAV control terminal is configured to control the UAV and receive the status information broadcast by the UAV.

35. An unmanned aerial vehicle (UAV) control system, comprising:
a UAV and head-mounted display glasses, wherein the head-mounted display glasses comprise:

a screen configured to display a movable mark; and
at least one processor configured to acquire input information of a user, and move, according to the input information, the movable mark to control the UAV.

36. The UAV control system of claim 35, wherein the input information includes posture information of the user.

37. The UAV control system of claim 35, wherein the input information includes direction information for moving the movable mark input by the user through an input device.

38. The UAV control system of claim 37, wherein the input device includes at least one of a five-dimension keyboard, a joystick, a touch pad, a touch screen, or a virtual keyboard.

39. The UAV control system of claim 36, wherein the posture information includes at least one of a yaw angle or a pitch angle.

40. The UAV control system of claim 39, further comprising an inertial measurement unit (IMU) coupled to the at least one processor, wherein the IMU is configured to sense the yaw angle and the pitch angle of a head of the user, and send the yaw angle and the pitch angle of the head of the user to the at least one processor.

41. The UAV control system of claim 40, wherein the at least one processor is configured to:

determine, according to the yaw angle and the pitch angle, a position of the movable mark on a screen; and
determine, according to the position of the movable mark on the screen, a target object displayed on the screen.

42. The UAV control system of claim 41, wherein the at least one processor is configured to:

determine, according to the yaw angle, a coordinate of the movable mark in a horizontal direction of the screen; and
determine, according to the pitch angle, a coordinate of the movable mark in a vertical direction of the screen.

**43.** The UAV control system of claim 42, wherein the at least one processor is configured to:

determine, according to the yaw angle of the head of the user sensed by the IMU for once, the coordinate of the movable mark in the horizontal direction of the screen; and
determine, according to the pitch angle of the head of the user sensed by the IMU for once, the coordinate of the movable mark in the vertical direction of the screen.

**44.** The UAV control system of claim 42, wherein the at least one processor is configured to:

determine, according to an angle difference between two yaw angles of the head of the user sensed by the IMU, a coordinate offset of the movable mark in the horizontal direction of the screen; and
determine, according to an angle difference between two pitch angles of the head of the user sensed by the IMU, a coordinate offset of the movable mark in the vertical direction of the screen.

**45.** The UAV control system of claim 41, wherein:

the at least one processor is configured to adjust the position of the movable mark on the screen to point the movable mark to the target object; and
the head-mounted display glasses further comprise a receiver coupled to the at least one processor, wherein the receiver is configured to receive a selection instruction, the selection instruction being used to select the target object.

**46.** The UAV control system of claim 45, wherein the receiver receiving the selection instruction input by the user for selecting the target object comprises:

receiving the selection instruction input by the user through pressing a confirmation key of a five-dimension keyboard; or
receiving the selection instruction input by the user through clicking on a touch pad; or
receiving the selection instruction input by the user through eye movement; or
receiving the selection instruction input by the user through clicking on a touch screen; or
selecting the target object after the movable mark has stayed on the target object for a period of time; or
receiving the selection instruction input by the user through clicking a virtual keyboard; or
receiving the selection instruction input by the user through operating a joystick.

**47.** The UAV control system of claim 45, further comprising an eye sensor coupled to the at least one processor, wherein:

the eye sensor is configured to sense eye movement of eyes of the user to obtain movement information, and send the movement information of the eyes of the user to the at least one processor; and
the at least one processor is configured to determine, according to the movement information, the selection instruction.

**48.** The UAV control system of claim 45, wherein the selection instruction includes a click selection or a box selection.

**49.** The UAV control system of any one of claims 35 to 48, wherein the at least one processor is further configured to:

acquire status information of the UAV; and
synchronize, according to the acquired status information of the UAV, status information of the UAV stored locally.

**50.** The UAV control system of claim 49, further comprising a transmitter coupled to the at least one processor, wherein:

the transmitter is configured to send a request for acquiring the status information to the UAV; and
the receiver is further configured to receive the status information sent by the UAV.

**51.** The UAV control system of claim 49, wherein the receiver is further configured to receive the status information broadcast by the UAV.

**52.** The UAV control system of claim 49, wherein the receiver is further configured to receive the status information of the UAV sent by another UAV control terminal, and the other UAV control terminal is configured to control the UAV and receive the status information broadcast by the UAV.

FI
G.
1

```
┌─────────────────────────────────────┐
│        Display a movable mark        │─── S101
└─────────────────────────────────────┘
                    │
                    ▼
┌─────────────────────────────────────┐
│      Acquire input information of    │─── S102
│               a user                 │
└─────────────────────────────────────┘
                    │
                    ▼
┌─────────────────────────────────────┐
│  Move, according to the input        │─── S103
│  information, the movable mark to     │
│  control the UAV                     │
└─────────────────────────────────────┘
```

11

FIG. 1A

15

13

12

14

FIG. 1B

Display a movable mark — S201

Acquire a yaw angle and a pitch angle of a head of the user sensed by an inertial measurement unit — S202

Determine, according to the yaw angle and the pitch angle, a position of the movable mark on a screen — S203

Select, according to the position of the movable mark on the screen, a target object displayed on the screen — S204

FIG. 2

FIG. 2A

FIG. 2B

FIG. 2C

FIG. 2D

FIG. 2E

FIG. 2F

FIG. 2G

FIG. 2H

FIG. 2I

Adjust the position of the movable mark on the screen to point the movable mark to the target object. — S301

Receive a selection instruction, the selection instruction being used to select the target object — S302

FIG.3

Aquire status information of the UAV — S401

Synchronize, according the acquired status information of the UAV, status information of the UAV stored locally — S402

FIG. 4

Screen — 52 — 50

Processor — 51

FIG.5

FIG. 6

FIG.7

FIG.8

# INTERNATIONAL SEARCH REPORT

| International application No. |
|---|
| PCT/CN2016/100072 |

## A. CLASSIFICATION OF SUBJECT MATTER

G02B 27/01 (2006.01) i; G06F 3/01 (2006.01) i

According to International Patent Classification (IPC) or to both national classification and IPC

## B. FIELDS SEARCHED

Minimum documentation searched (classification system followed by classification symbols)

G02B; G06F; A63H; B64C; H04N

Documentation searched other than minimum documentation to the extent that such documents are included in the fields searched

Electronic data base consulted during the international search (name of data base and, where practicable, search terms used)

CNPAT, WPI, EPODOC, CNKI: 无人机, 虚拟, 现实, 交互, 沉浸, 头戴式, 显示, 眼镜, 姿态, 传感, 检测, 探测, VR, virtual, immers+, drone, aer+, air+, fly+, control+, head, display+, glasses, posture, sensor, detect+

## C. DOCUMENTS CONSIDERED TO BE RELEVANT

| Category* | Citation of document, with indication, where appropriate, of the relevant passages | Relevant to claim No. |
|---|---|---|
| X | CN 102266672 A (PARROT) 07 December 2011 (07.12.2011), description, paragraphs [0071]-[0133], and figures 3-7 | 1, 3, 4, 14-16 |
| Y | CN 102266672 A (PARROT) 07 December 2011 (07.12.2011), description, paragraphs [0071]-[0133], and figures 3-7 | 2, 5-13, 19, 20, 37, 38 |
| X | CN 103620527 A (KOPIN CORP.) 05 March 2014 (05.03.2014), claims 21-29, description, paragraphs [0050]-[0062], and figures 1, 7A and 7C | 17, 18, 21-36, 39-52 |
| Y | CN 103620527 A (KOPIN CORP.) 05 March 2014 (05.03.2014), claims 21-29, description, paragraphs [0050]-[0062], and figures 1, 7A and 7C | 2, 5-13, 19, 20, 37, 38 |
| A | US 2013038692 A1 (KABUSHIKI KAISHA TOPCON) 14 February 2013 (14.02.2013), entire document | 1-52 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 June 2017 | 30 June 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Xuechun<br><br>Telephone No. (86-10) 62413623 |

Form PCT/ISA /210 (second sheet) (July 2009)

## INTERNATIONAL SEARCH REPORT

| | International application No. |
|---|---|
| | PCT/CN2016/100072 |

C (Continuation).     DOCUMENTS CONSIDERED TO BE RELEVANT

| Category* | Citation of document, with indication, where appropriate, of the relevant passages | Relevant to claim No. |
|---|---|---|
| A | WO 2013158050 A1 (AIRNAMICS, NAPREDNI MEHATRONSKI SISTEMI D.O.O.) 24 October 2013 (24.10.2013), entire document | 1-52 |
| A | CN 105222761 A (HARBIN INSTITUTE OF TECHNOLOGY) 06 January 2016 (06.01.2016), entire document | 1-52 |
| A | CN 105739525 A (GDU TECHNOLOGY (SHENZHEN) CO., LTD.) 06 July 2016 (06.07.2016), entire document | 1-52 |
| A | CN 202587217 U (NEW TIME GROUP DEFENCE SCIENCE & TECHNOLOGY CENTER) 05 December 2012 (05.12.2012), entire document | 1-52 |
| A | CN 105763790 A (PARROT) 13 July 2016 (13.07.2016), entire document | 1-52 |

Form PCT/ISA /210 (continuation of second sheet) (July 2009)

## INTERNATIONAL SEARCH REPORT
### Information on patent family members

| | International application No. |
|---|---|
| | PCT/CN2016/100072 |

| Patent Documents referred in the Report | Publication Date | Patent Family | Publication Date |
|---|---|---|---|
| CN 102266672 A | 07 December 2011 | AT 556755 T | 15 May 2012 |
| | | FR 2957266 A1 | 16 September 2011 |
| | | US 8958928 B2 | 17 February 2015 |
| | | EP 2364757 A1 | 14 September 2011 |
| | | JP 6037600 B2 | 07 December 2016 |
| | | US 2011221692 A1 | 15 September 2011 |
| | | FR 2957266 B1 | 20 April 2012 |
| | | CN 102266672 B | 01 April 2015 |
| | | EP 2364757 B1 | 09 May 2012 |
| | | JP 2011189929 A | 29 September 2011 |
| | | HK 1164202 A1 | 29 January 2016 |
| CN 103620527 A | 05 March 2014 | EP 2712432 A1 | 02 April 2014 |
| | | WO 2012154938 A1 | 15 November 2012 |
| | | US 2012287284 A1 | 15 November 2012 |
| US 2013038692 A1 | 14 February 2013 | JP 2013038622 A | 21 February 2013 |
| | | JP 6026088 B2 | 16 November 2016 |
| | | US 9158305 B2 | 13 October 2015 |
| | | EP 2557468 A2 | 13 February 2013 |
| WO 2013158050 A1 | 24 October 2013 | SI 24055 A | 30 October 2013 |
| CN 105222761 A | 06 January 2016 | None | |
| CN 105739525 A | 06 July 2016 | None | |
| CN 202587217 U | 05 December 2012 | None | |
| CN 105763790 A | 13 July 2016 | EP 3025770 B1 | 25 January 2017 |
| | | US 2016148431 A1 | 26 May 2016 |
| | | FR 3028767 A1 | 27 May 2016 |
| | | EP 3025770 A1 | 01 June 2016 |
| | | FR 3028767 B1 | 10 February 2017 |
| | | JP 2016119655 A | 30 June 2016 |

Form PCT/ISA /210 (patent family annex) (July 2009)